Europäisches Patentamt

European Patent Office

Office européen des brevets

(19)

Publication number: **0 271 684**

**A2**

(12) **EUROPEAN PATENT APPLICATION**

(21) Application number: 87115951.3

(51) Int. Cl.⁴ **C08C 1/065** , C08F 6/18

(22) Date of filing: 30.10.87

The title of the invention has been amended (Guidelines for Examination in the EPO, A-III. 7.3).

(30) Priority: 04.11.86 JP 260790/86
04.11.86 JP 260791/86
26.11.86 JP 279628/86

(43) Date of publication of application:
**22.06.88 Bulletin 88/25**

(84) Designated Contracting States:
**DE FR GB IT NL**

(71) Applicant: **Ube Cycon, Ltd.**
**7-1, Kasumigaseki 3-chome Chiyoda-ku Tokyo(JP)**

(72) Inventor: **Goto, Hideo Ube Cycon Ltd.**
**Ube Koji nai 525-14 Aza Okinoyama**
**Oaza Okiube Ube-shi Yamaguchi(JP)**

(74) Representative: **Gervasi, Gemma, Dr. et al**
**NOTARBARTOLO & GERVASI Srl 33, Viale Bianca Maria**
**I-21100 Milano(IT)**

(54) **Process for agglomerating a polymer latex.**

(57) A process for agglomerating a polymer latex according to, which process a polymer latex having a large particle size and a uniform particle size distribution can be produced without forming any coagulum, with a large effect of enlarging the particle size and in a short time is provided, which process is directed to a process for agglomerating polymer latex particles by adding an acid to a polymer latex of a small particle size (A) obtained by emulsion polymerization using an emulsifying agent which is reduced in the surface activity in an acetic state, and characterized by carrying out at least one of the following operations (i) to (iv):

(i) an operation of continuously feeding the latex (A) and an acid into a flow type tubular apparatus;

(ii) an operation of adding to the latex (A), an emulsifying agent of a good surface activity in an acidic state in advance, followed by continuously feeding the resulting latex and an acid into a flow type tubular apparatus;

(iii) an operation of adding to the latex (A), a polymer-agglomerating agent having both a polar group and a non-polar group in one molecule in 0.0001 to 0.5 part based on 100 parts of solids of the polymer latex in advance, followed by adding an acid so as to lower the pH of the resulting latex down to 6 or less; and

(iv) an operation of adding to the latex (A), an emulsifying agent of a good surface activity in an acidic state in advance; then adding an acid in excess to the resulting latex to prepare a latex having a lower concentration than that of the latex (A); thereafter mixing the resulting latex with the latex (A); and keeping the mixed latex at a pH of 6 or less.

*F I G. 1*

## PROCESS FOR COAGULATING POLYMER LATEX

BACKGROUND OF THE INVENTION

1. Field of the Invention

This invention relates to a process for agglomerating a polymer latex for obtaining a polymer latex having a large particle size, in a commercially advantageous manner and without byproducing any coagulated particles at the agglomeration step.

2. Description of the Related Art

Many of resins obtained by emulsion polymerization using rubber latexes as a substrate are important for engineering plastics, and as such resins, ABS resin obtained by subjecting styrene and acrylonitrile to graft polymerization onto polybutadiene, ASA resin obtained by subjecting styrene and acrylonitrile to graft polymerization onto polybutyl acrylate, etc. are exemplified.

In general, polymers containing grafted rubber particles as a component vary in their physical properties due to graft polymerization, but even when the particle size of the rubber substrate particles and its distribution are varied, the physical properties of the polymers vary notably; hence as well known, it is necessary to use a rubber substrate having an adequate particle size and distribution state thereof.

In the case of the above ABS resin, generally unless it has a particle size of 2,500 Å or more, it is difficult to obtain superior physical properties, and further it is preferred to contain a certain quantity of particles of 5,000 Å or more.

However, production of polymer particles having such a large particle size by way of emulsion polymerization is commercially disadvantageous since the polymerization rate is notably reduced as easily derived from the general theory of emulsion polymerization.

As to the process for agglomerating polymer latexes (hereinafter abbreviated to latexes), various processes have so far been known.

For example, U.S. patents 2,446,101 and 2,494,002 disclose addition of ammonium chloride to latexes, but when agglomeration is carried out using such a water-soluble salt, its effect is so small that it is necessary to add it in a large quantity in order to enhance the effect of increasing the particle size and further it is also necessary to add a large quantity of an emulsifying agent in order to again stabilize (re-stabilize) latexes after agglomeration.

These low molecule components added at the agglomeration step are undesirable since a problem in the aspect of stability is often raised at the subsequent step and further they remain in the final polymer to damage the quantity of product.

U.S. patents 3,281,386 and 3,551,370 propose a process of deactivating the surfactant activity of emulsifying agents by the use of acetic acid or acetic anhydride to thereby agglomerate particles, but according to such a process, the step of adding the acid to latexes is most unstable, and on the boundary surface where the added acid diffuses to the inside of the latexes, coagulated particles (i.e. particles which are agglomerated and enlarged up to 10 μ or more so that they can no longer return to emulsion state; such particles will hereinafter be referred to as coagulum) are often formed, and in order not to form such coagulum, it is necessary to sufficiently lower the acid concentration. However, use of the acid of such a low concentration is disadvantageous since it not only lowers the concentration of the final latexes but reduces the effect of enlarging the particle size.

On the other hand, a process of using the so-called polymer-agglomerating agent having both a hydrophilic group and a hydrophobic group in one molecule is disclosed in U.S. patents 3,049,500; 3,056,758; 3,330,795; and 3,288,741 and Japanese patent publication No. Sho 46-14539/1971.

According to such a process, the polymer-agglomerating agent is used as it is, or in a partly modified form and singly or together with a specified salt.

However, such a process of using the polymer-agglomerating agent has serious drawbacks that a long time is required at the agglomeration step; the effect of enlarging the particle size is small; and since agglomeration is carried out in a state where the surface activity has not yet been lost, it is difficult to stop the agglomeration after completion of the agglomeration step so that the particle size varies during the storage of the resulting latexes.

As described above, the above-mentioned known processes have various problems in the aspect of the agglomeration process, and further any of the processes are directed to batch process so that they have serious drawbacks originated therefrom.

The above-mentioned processes are roughly classified into two types of processes, that is, a process of unstabilizing latexes by the use of an acid or a salt and a process of using an agglomerating agent in a state where the stability of latexes is kept. According to the latter process, the effect of enlarging the particle size is so small as described above that the effect of employing the agglomeration step is not observed as compared with the process of obtaining the desired particle size by way of polymerization. On the other hand. according to the former process, the effect of enlarging the particle size is notable, but when the process ·s batchwise carried out, the method of adding the agglomerating agent and the method of uniformly mixing latexes with the agglomerating agent raise the following problems:

When an aqueous solution of an agglomerating agent such as acids, salts, etc. is added to latexes, the concentration of the solution on the boundary surface between the solution and the latexes is highest so that the latexes are most unstable and hence coagula are liable to be formed. Since the droplets of the agglomerating agent and the latexes are diffused into one another, the latex particles diffused into the inside of the droplets of the agglomerating agent contact with the agglomerating agent of a very high concentration so that coagula are often formed. In order to avoid this, it is necessary to make the droplet diameter of the agglomerating agent as small as possible and also mix the droplets with the latexes in a short time, but when this step is batchwise carried out, the time during which uniform mixing is effected increases with a leap with the increase of its quantity once treated (hereinafter referred to as "batch size"). In order to shorten this mixing time, agitation is effective, but since unstable latexes under agglomeration is agitated, a large quantity of coagula is often formed in the vicinity of agitating vane.

As described above, when batch manner is applied to the agglomeration process of unstabilizing latexes, it is necessary to lower the latex concentration and the concentration of the aqueous solution of the agglomerating agent with the increase of the batch size; hence it is very difficult to obtain latexes of large particles on a commercial scale.

On the other hand, as a process for continuously agglomerating latexes, a process of agglomerating latexes by colliding latex particles with one another with a high energy by the use of a high pressure homogenizer has been known, but according to the process, since the collision energy is proportional to the particle size and also since particles of smaller particle size have a higher effect of protection by emulsifying agents, particles of smaller particle size remain and only a portion of latex particles agglomerates so that a serious drawback is raised that only latexes having a very broad particle size distribution are obtained.

## SUMMARY OF THE INVENTION

The object of the present invention is to provide a process for agglomerating a polymer latex according to which process a polymer latex having a large particle size and a uniform particle size distribution can be produced without forming any coagulum, with a large effect of enlarging the particle size and in a short agglomeration time, in the agglomeration process.

The present invention resides in a process for agglomerating polymer latex particles by adding an acid to a polymer latex of a small particle size obtained by emulsion polymerization using as a main emulsifying agent, an emulsifying agent which is reduced in the surface activity in an acidic state, in a conventional manner, which process is characterized by carrying out any one of the following four operations (i) to (iv):

(i) an operation of continuously feeding the polymer latex of a small particle size and an acid into a flow type tubular apparatus provided with an equipment for mixing these two materials statically or dynamically;

(ii) an operation of adding to the polymer latex of a small particle size, an emulsifying agent having a good surface activity in an acidic state in advance, followed by continuously feeding the resulting polymer latex and an acid into a flow type tubular apparatus;

(iii) an operation of adding to the polymer latex of a small particle size, a polymer-agglomerating agent having both a polar group and a non-polar group in one molecule in a quantity of 0.0001 to 0.5 part by weight based on 100 parts by weight of solids contained in the polymer latex in advance, followed by adding an acid so as to lower the pH of the resulting polymer latex down to 6 or less; and

(iv) an operation of adding to the polymer latex (A) of a small particle size, an emulsifying agent having a good surface activity in an acidic state in advance; then as a first step, adding an acid in excess to the resulting polymer latex to prepare a polymer latex having a lower concentration than that of the polymer latex (A) of a small particle size; thereafter as a second step, adding to and mixing with the resulting polymer latex, the polymer latex (A) of a small particle size; and keeping the resulting mixed polymer latex at a pH of 6 or less.

With reference to the small particle size polymer latex used in the present invention, though the particle size cannot be determined definitively, it is, for example, not higher than 2500 Å

BRIEF DESCRIPTION OF THE DRAWING

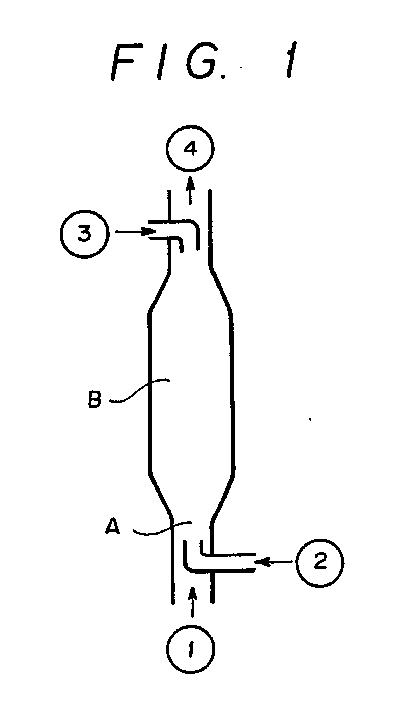

Fig. 1 shows a schematical construction view illustrating a flow type tubular apparatus used in Examples of the present invention.

DETAILED DESCRIPTION OF PREFERRED EMBODIMENTS

The polymer latex of a small particle size used in the present invention refers to those which are formed according to conventional emulsion polymerization using monomer, water, initiator, etc. and also using an emulsifying agent which is reduced in the surface activity in an acidic state, as a main emulsifying agent. The emulsifying agent which is reduced in the surface activity has no particular limitation, and is represented by an emulsifying agent having a carboxylic acid group and an alkali metal salt. As such an agent, anionic emulsifying agents such as potassium laurate, sodium oleate, potassium salts of mixed fatty acids, potassium rosinate, etc. may be used. The quantity thereof added may be a quantity necessary for keeping the stability of polymer latex when a polymer latex of a small particle size used in the agglomeration is polymerized, and has no particular limitation, but in general, it may be used in a range of 0.5 to 5 parts by weight based on 100 parts by weight of polymer.

The kind of the polymer latex of a small particle size used in the present invention has no particular limitation, but as the latex, soft polymer latexes are preferred such as polybutadiene latex, polystyrene-butadiene copolymer latex, polyacrylonitrile-butadiene copolymer latex, polybutyl acrylate latex, etc. Further, hard polymer latexes may also be used such as polystyrene latex, polyacrylonitrile-styrene copolymer latex, etc. As to these latexes, two kinds or more thereof may be used in admixture.

As to the kind of the acid used for lowering the pH of the latexes in the present invention, any of those having a higher ionization constant than that of the acid group of the above-mentioned emulsifying agent which lowers the surface activity in an acidic state may be used. Examples of such acids are strong acids such as sulfuric acid, hydrochloric acid, sulfonic acid, etc. and weak acids such as maleic acid, itaconic acid, acetic acid, etc. These acids may be used alone or in the form of mixed solution of two or more kinds thereof. The concentration of the acids is preferred to be as high as possible provided that no coagulum is formed at the agglomeration step. As to the quantity thereof added, since it varies depending on the kind and quantity of emulsifying agents used, it cannot be limited, but the pH of the latexes is preferred to be 6 or less.

With regard to the operation (i):
According to this operation of the present invention, even when polymer latexes of a large particle size is produced by continuous agglomeration, it is possible to inhibit coagula from forming at the mixing step since the volume of the part where an acid is mixed with the latexes is sufficiently small.

In this operation (i) of the present invention, an inorganic electrolyte may be previously added to latexes obtained by emulsion polymerization in a conventional manner, or an alkali substance and/or an emulsifying agent having a surface activity which is stable in an acidic state may be continuously fed into a flow type tubular apparatus.

In the operation (i) of the present invention, when an emulsifying agent is added to polymer latexes in advance, the emulsifying agent used therein is the one having a good surface activity in an acidic state and as such, an emulsifying agent having an acid group of a higher ionization constant than those of the above-mentioned acids may be used. For example, as emulsifying agents constituted from sulfonic acid and alkali metals, sodium alkylbenzenesulfonates, sodium alkylnaphthalenesulfonates, potassium alkyldiphenylsulfonates, sodium laurylsulfate, etc. may be mentioned. The quantity of the agent added varies depending on the kind and concentration of the above-mentioned acids and the kind and concentration of the latexes and hence cannot be limited, but it is generally in the range of 0.01 to 1.0 part by weight based on 100 parts by weight of the latexes. If the quantity thereof added is less than 0.01 part by weight, coagula often are formed at the acid addition step, while if it exceeds 1.0 part by weight, the effect of enlarging the particle size is reduced. Further, the time when it is added may be either the time when the latex of a small particle size to be used for the agglomeration is polymerized or after the latex has been polymerized.

The flow type tubular apparatus used in the present invention may be a conventional one and has no particular limitation, but an apparatus as illustrated in Fig. 1 is preferred. The flow type tubular apparatus comprises a tube with its central section expanded, having two inlets for the latex and acid at its one end and having an inlet for the restabilizer and an outlet for the stabilized latex at the other end. In this apparatus, a latex is fed through an introducing port 1 or 2, while an acid is fed through an introducing port 2 or 1. An unstable latex having an enlarged particle size is again converted into a stable latex by re-stabilizers such as an alkali substance and/or an emulsifying agent having a surface activity in an acidic state, fed into an introducing port 3, and discharged through a discharge port 4 to the outside of the apparatus. In the apparatus, a statically or dynamically stirring means is preferred to be provided at either one or both of section A where the latex is mixed with the acid and section B where the unstable latex is mixed with he re-stabilizers, but it is unsuitable to impart an excess shear or flow. Further, the apparatus shown in the figure may be provided at various angles of a horizontal one to a vertical one. If the density of the latex particles to be agglomerated is higher than that of water, it is preferred to provide the introducing part at the upper part of the apparatus and thereby allow the liquid to descend, while if the density of the particles is lower than that of water, it is preferred to provide the introducing part so as to allow the flow to ascend as shown in the figure.

Addition of a water-soluble salt to the latex used in the present invention in advance is effective for enhancing the stability of latexes of a small particle size at the time of polymerizing them or controlling the particle size and also effective for enhancing the effect of enlarging the particle size at the agglomeration step. The kind of the salt used has no particular limitation as far as such conditions are satisfied that the salt is water-soluble and no water-insoluble salt is formed or no gas is evolved by its reaction with the acid added. Examples of such a salt are sodium chloride, potassium sulfate, sodium acetate, potassium phosphate, tetrasodium pyrophosphate, etc. These acids may be used alone or in admixture of two kinds or more thereof.

The latex to be discharged from the discharge port 4 shown in the figure is so unstable that it is difficult to transfer and store the latex as it is. As an alkali substance used for re-stabilizing this latex, for example, sodium hydroxide, potassium hydroxide, ammonium hydroxide, etc. may be used. Its quantity added is suitable to be a quantity in which the acid added at the agglomeration step is neutralized. If its concentration is too high, coagula are formed so that a concentration of 20% or lower is preferred.

As another process for re-stabilizing the latex, there is a process of adding an emulsifying agent which is stable at a pH of 6 or less. In this case, besides the above-mentioned emulsifying agents having a good surface activity in an acidic state, nonionic surfactants such as polyoxyethylene lauryl ether, polyoxyethylene octylphenyl ether, sorbitan monooleate, etc. may be used.

With regard to the operation (ii):

The polymer-agglomerating agent used in this operation of the present invention refers to a water-soluble agent having a polar group having an affinity with water and also having a non-polar group having an affinity with the polymer latex in one molecule. Examples of the agent are polyalkylene oxides represented by polyethylene oxide and polypropylene oxide, polyalkylene glycols such as polyethylene glycol, polypropylene glycol, etc., partial oxides of polyalkylene oxides or polyalkylene glycols, polyvinyl methyl ether, polyvinyl alcohol, partially silicated polyvinyl acetate, etc., and these may be used alone or in admixture thereof. The molecular weight of these polymers may be employed in a broad range, but it is limited to a range where they are kept water-soluble. The quantity thereof added may be very slight and is in the range of 0.0001 to 0.5 part by weight, preferably 0.0005 to 0.2 part by weight based on 100 parts by weight of solids contained in the polymer latex of a small size. If the quantity is less than 0.0001 part by weight, the effect of enlarging the particle size of the polymer latex is slight, while it exceeds 0.5 part by weight, coagula are formed.

Further, the acid for lowering the pH of the latex may be the same as those previously described in the operation (i), but the pH of the polymer latex is required to be 6 or less.

In the operation (ii) of the present invention, an inorganic electrolyte or an emulsifying agent having a good surface activity in an acidic state may be added to the polymer latex to be agglomerated, in advance, and in this case, these two may be added alone or in admixture thereof.

The kind of the above-mentioned inorganic electrolyte has no particular limitation as far as it is water-soluble and forms no water-insoluble salt and also evolves no gas by reaction thereof with an acid added. As the substance, sodium chloride, sodium acetate, potassium phosphate, tetrasodium pyrophosphate, etc. may be used, and these may be used alone or in admixture thereof. The quantity of the substance added may be in the range of 0 to 5 parts by weight based on 100 parts by weight of the polymer. If it is too large, the mechanical stability of the latex is often reduced at the post-step of using agglomerated latex.

Further, the emulsifying agent having a good surface activity may be the same as that described in the step (i), and the addition conditions (unfavorable conditions of the addition quantity, excess addition and insufficient addition) also apply to the foregoing.

In addition, the time when the above-mentioned inorganic electrolyte and emulsifying agent are added may be either the time when the polymer latex of a small particle size is polymerized or the time when it has been polymerized.

In the present invention, addition of water-soluble salts to the starting raw material in advance is effective for enhancing the stability of the polymer latex of a small particle size when polymerized and controlling the particle size, and further effective for enhancing the effect of enlarging the particle size at the agglomeration step. The kind of the salts has no particular limitation as far as such conditions are satisfied that the salts used are water-soluble; no water-insoluble salts are formed by the reaction thereof with acids used; and no gas is evolved at the time of the reaction. Examples of such salts are sodium chloride, potassium sulfate, sodium acetate, potassium phosphate, tetrasodium pyrophosphate, etc. These salts may be used alone or in admixture of two kinds or more thereof. The agglomerated polymer latex in the present invention is so unstable that it is necessary to re-stabilize the latex taking its transfer and long time storage into account. The process therefor includes a process of using an alkali and a process of using an emulsifying agent. According to the former process, for example, sodium hydroxide, potassium hydroxide or ammonium hydroxide is added, and its quantity added is suitable to be a quantity in which the acid added at the agglomeration step is neutralized. If its concentration is too high, coagula are formed at the time of its addition; hence 15% or less is preferred.

Further, according to the latter process, an emulsifying agent which is stable at a pH of 6 or less is added, and not only the above-mentioned emulsifying agents having a good surface activity in an acidic state, but also nonionic surfactants such as polyoxyethylene lauryl ether, polyoxyethylene octylphenyl ether, sorbitan monooleate, etc. may be used.

With regard to the operation (iii):
According to this operation of the present invention, an emulsifying agent having a good surface activity is added in advance of adding an acid to the polymer latex of a small particle size, and the kind and quantity added of the agent has been described above in the operation (ii). Further, unfavorable matters caused in the cases of excess addition and insufficient addition are also the same as those described therein.

Next, as to the acid added at the first step, any of those having a higher ionization constant than that of the acid group of the above-mentioned emulsifying agent which lowers the surface activity in an acidic state may be used, and examples of such an acid have been already described.

The quantity of the acid added to the polymer latex of a small particle size cannot be limited since the quantity varies depending on the kind and quantity of the emulsifying agent used, but the pH of the latex at the time of completion of the second step is required to be 6 or less.

The concentration of the polymer latex used at the first step is important because if it is too high, coagula are formed at the step of adding the acid, while if it is too low, the effect of enlarging the particle size is small. However, the range of the concentration cannot be limited since it varies depending on the kind and concentration of the acid used and the kind and concentration of the emulsifying agent having a good surface activity in an acidic state, used. However, in view of the commercial object, it is preferred to adjust the other conditions so that the latex concentration may be 30% or higher.

Next, as to the polymer latex added at the second step in this operation (iii), since the concentration of the acid in contact and admixture with the latex has been sufficiently diluted at the first stage and also since the difference between the viscosity of the polymer latex and that of the polymer latex having completed the first step is small, a polymer latex of concentration higher than that of the polymer latex obtained at the first step can be used, and hence it is possible to enhance the effect of enlarging the particle size. For example, if the particle size is 1,000 Å or larger, it is possible to use the latex in a concentration of 40% or higher.

As to the ratio of the respective quantities of the polymer latex used at the first step and that used at the second step, a broad range thereof is possible, and as compared in terms of solids, it is possible that the polymer latex used at the first step occupies 1/10 to 9/10 of the whole. In order to reduce the pH of the polymer latex down to 6 or less at the time of completion of the second step, it is necessary to add a sufficient quantity of an acid for neutralizing the emulsifying agent and electrolyte contained in the latexes used at the first step and the second step, at the first step in advance.

In the operation (iii) of the present invention, it is useful as described above in the operation (ii) to add a water-soluble salt to the starting raw material in advance. This applies also to the kind and addition conditions of the salts.

The polymer latex after completion of the second step is so unstable that its transfer and long time storage are difficult. Thus a means of re-stabilizing the latex is required. This means has already been described, that is, a process using an alkali and a process using a surfactant may be applied.

The present invention will be concretely described by way of Examples and Comparative examples.

Example 1

Using a flow type tubular apparatus having an inner diameter of 36 mm at section B, as shown in Fig. 1, a polybutadiene latex having an average particle size of 850 Å and a solids content of 38% and containing potassium oleate (3.2 parts) was fed into the apparatus through an introducing port 1 at a rate of 52 g/min. After the inside of the tube was filled with the latex, a 2.5% aqueous solution of acetic acid was fed into the apparatus through an introducing port 2 at a rate of 15.9 g/min. and also a 10% aqueous solution of sodium dodecylbenzenesulfonate was fed thereinto through an introducing port 3 at a rate of 15.9 g/min. The inside of section B was stirred dynamically.

An agglomerated latex discharged from a discharge port 4 one hundred minutes after start of feed of the aqueous solution of acetic acid had a solids content of 29% and an average particle size of 2,500 Å and no coagulum was formed during the period.

Example 2

Using a flow type tubular apparatus having an inner diameter of 10 mm at section B, as shown in Fig. 1, the same latex as that used in Example 1 was fed into the apparatus through an introducing port 1 at a rate of 9.8 g/min. A 2.5% aqueous solution of acetic acid was fed into the apparatus through an introducing port 2 at a rate of 3.0 g/min. and also a 10% aqueous solution of sodium dodecylbenzenesulfonate was fed thereinto through an introducing port 3 at a rate of 0.4 g/min. The inside of section B was stirred dynamically. A stable latex discharged from a discharge port 4 ninety minutes after start of feed of the aqueous solution of acetic acid had an average particle size of 3,200 Å. Further, the agglomerated latex obtained during the period was filtered through two sheets of gauze. As a result, no coagulum was contained.

Example 3

To the same latex as that used in Example 1 was added sodium dodecylbenzenesulfonate in a quantity of 0.1 part by weight based on 100 parts by weight of the solids contained in the latex, followed by feeding the resulting latex into a flow type tubular apparatus having an inner diameter of 12 mm at section B, as shown in Fig. 1, through an introducing port 1 at a rate of 88 g/min. After the inside of the apparatus was filled with the latex, a 12% aqueous solution of acetic acid was fed into the apparatus through an introducing port 2 at a rate of 5.2 g/min. and also a 10% aqueous solution of potassium hydroxide was fed thereinto through an introducing port 3 at a rate to neutralize the above acetic acid. The inside of section B was stirred dynamically. Thirty minutes after start of feed of the aqueous solution of acetic acid, collection of an agglomerated latex discharged from a discharge port 4 was started and the collection was stopped after lapse of 200 minutes.

The resulting agglomerated latex had an average particle size of 2,600 Å and a solids content of 34.8%, that is, it was a latex having a high concentration and a large particle size. This latex was filtered through two sheets of gauze. As a result, only 0.6 part by weight on dry basis of coagula based on 100 parts of solids contained in the latex used in the agglomeration was formed.

Example 4

To the same latex as that used in Example 1 were added sodium dodecylbenzenesulfonate (0.1 part by weight based on 100 parts by weight of the solids contained in the latex) and deionized water to adjust the concentration of the mixture to 34%.

The resulting latex was fed into a flow type tubular apparatus having an inner diameter of 8 mm at section B as shown in Fig. 1 through an introducing port 2, followed by filling the inside of the tube with the latex, thereafter feeding a 12% aqueous solution of acetic acid through an introducing port 1 so that the quantity of acetic acid might be 2.0 parts by weight based on 100 parts by weight of the solids contained in the latex.

The feeding rate of the latex and the aqueous solution of acetic acid was adjusted so that the liquid flow rate at section B might be 1 m/min., and a 10% aqueous solution of KOH in a quantity to neutralize the fed acetic acid, through an introducing port 3. The inside of section B was stirred dynamically.

The latex discharged from a discharge port 4 two hours after start of feed of the aqueous solution of acetic acid had an average particle size of 2,600 Å and a solids content of 30.4%, and even when continuous operation was carried out for 3 hours, no coagulum was formed.

Comparative example 1

The same latex as that used in Example 1 (600 g) was added into a 1 ℓ beaker, followed by quietly adding thereto a 2.5% aqueous solution (182 g) of acetic acid over 3 minutes while agitating the mixture by means of a stirrer provided with 4 turbine blades of 6 cm in diameter at a rate of 100 rpm.

About 2 minutes after completion of the addition, large particles of coagula were visibly observed at the upper part of the agitating element and thereafter they rapidly increased; hence the experiment was stopped.

Comparative example 2

To the same latex as that used in Example 1 was added sodium dodecylbenzenesulfonate (0.1 part by weight based on 100 parts by weight of the solids contained in the latex), followed by adding the resulting latex (600 g) into a 1 ℓ beaker and quietly adding a 12% aqueous solution (38 g) of acetic acid without stirring the latex. Ten minutes after addition of the aqueous solution of acetic acid, a 10% aqueous solution (42.6 g) of KOH was quietly added, followed by allowing the mixture to stand for 5 minutes, further agitating it for 5 minutes and filtering the resulting latex. As a result, a large quantity of coagula was adhered onto the bottom part of the beaker.

Comparative example 3

Using the same latex and acid as used in Comparative example 2, an aqueous solution of acetic acid was quietly added thereto over one minute while agitating the latex, as in Comparative example 1. Thirty minutes after completion of addition of the aqueous solution of acetic acid, a 10% aqueous solution (42.6 g) of KOH was added and agitation was continued. After 5 minutes, the latex was filtered. As a result, coagula in a quantity of 4.5 parts by weight on dry basis based on 100 parts by weight of the solids contained in the latex were formed.

Example 5

Butadiene monomer (100 parts), deionized water (85 parts), potassium oleate (1.7 part), sodium salt of an organosulfonic acid (TAMOL-SN TR, trademark of a product manufactured by Rohm and Haas Company) (0.1 part), tetrasodium pyrophosphate (1.5 part), each part by weight, and small quantities of a chain transfer agent and an initiator were introduced into a pressure vessel provided with a stirrer, followed by raising the temperature up to 60°C to initiate polymerization. When the rate of polymerization reached 65% after the initiation of polymerization, the temperature was raised up to 65°C, followed by adding deionized water and an initiator. After a polymerization time of 20 hours, the rate of polymerization reached 92%.

The resulting polymer latex of a small particle size had a solids content of 52.6% and an average particle size of 1,700 Å as measured according to light scattering method. This latex will be referred to as latex A.

Next, to this latex A were added sodium salt of an organosulfonate (0.3 part by weight), a polyethylene oxide (an average molecular weight of 20,000) and deionized water to adjust the solids content to 40%. To the resulting latex was added 2% sulfuric acid (32 parts by weight) with stirring of this latex to keep the pH of the latex at 3.3. After 100 minutes, KOH was added to adjust the pH of the latex to 11.5 and its average particle size was measured to give 3,100 Å. Further, this latex was filtered through two sheets of gauze. As a result, no coagulum was present.

Example 6

Example 5 was repeated except that in the polymerization of the latex A, sodium salt of an organosulfonate (0.3 parts), tetrasodium pyrophosphate (0.1 part) and sodium sulfate (0.8 part), each part by weight, to obtain a polymer latex of a small particle size having a solids content of 52% and an average particle size of 1,850 Å. This latex will be referred to as latex B.

Next, to this latex B were added a polyethylene oxide and sodium salt of an organosulfonate in 0.01 part by weight and 0.1 part by weight, respectively, based on 100 parts by weight of the solids contained in the latex B and further, deionized water was added to adjust the solids content to 40%.

To the resulting latex was added 2% sulfuric acid in 18 parts by weight based on 50 parts by weight of the solids contained in the latex. Successively, the latex B in a quantity of 50 parts in terms of solids was added. As a result, the resulting latex after the admixture had a pH of 3.4. After 40 minutes, an alkali was added to adjust the pH to 11.5, and the average particle size was measured to give 3,900 Å. Further, the solids content of the latex was 40% and no coagulum was formed.

Further, the latex was allowed to stand for 3 weeks and the average particle size was measured to give 3,950 Å.

Example 7

Example 6 was repeated except that the quantity of the polyethylene oxide added to latex B was changed to 0.001 part by weight based on 100 parts by weight of the solids, to obtain an agglomerated latex having an average particle size of 3,200 Å.

## Comparative example 4

Example 5 was repeated except that the polyethylene oxide was not added, to obtain a latex having an average particle size of 2,500 Å.

## Comparative example 5

Example 6 was repeated except that the polyethylene oxide was not added, to obtain a latex having an average particle size of 2,850 Å.

## Comparative example 6

To the latex A (100 parts by weight) were added sodium salt of an organosulfonate (0.1 part by weight), a polyethylene oxide (0.08 part by weight) and deionized water to adjust the solids content to 40%. To the resulting latex was added 2% sulfuric acid with stirring of the latex to make the pH of the latex 9.3, followed by allowing the latex to stand. After 6 days, an alkali was added to adjust the pH to 11.5, and the average particle size was measured to give 2,200 Å.

## Comparative example 7

Comparative example 6 was repeated except that the pH of the latex after addition of sulfuric acid was changed to 5.0. After addition of sulfuric acid, the resulting latex was allowed to stand for 200 minutes, to give an average particle size of 2,000 Å.

## Example 8

Butadiene monomer (100 parts), deionized water (85 parts), potassium oleate (1.6 part), sodium salt of an organosulfonate (TAMOL-SN TR, trademark of a product manufactured by Rohm and Haas Company) (0.3 part), sodium sulfate (0.8 part), potassium persulfate (0.2 part), t-dodecylmercaptan (0.15 part) and KOH (0.18 part), each part by weight, were introduced into a pressure vessel provided with a stirrer, followed by raising the temperature up to 60°C and initiating polymerization.

When the rate of polymerization reached 65% after the initiation of polymerization, deionized water (5 parts by weight) having potassium persulfate (0.1 part by weight) dissolved therein was added into the pressure vessel and the polymerization temperature was raised up to 65°C. After a polymerization time of 26 hours, a polybutadiene latex having an average particle size of 1,850 Å, a solids content of 50.4% and a viscosity of 200 cp was obtained with a rate of polymerization of 88%. This latex will be referred to as latex A.

Next, to the latex A were added sodium salt of an organosulfonate (0.1 part by weight based on the solids contained in the latex A) and deionized water to make the concentration 40% and the resulting latex (50 parts by weight in terms of solids) was added into a vessel provided with a stirrer, followed by adding 2% sulfuric acid (18 parts by weight) with stirring.

Further, while continuing agitation, the latex A (50 parts by weight in terms of solids) was quietly added, followed by adding a 5% aqueous solution of NaOH in an equivalent quantity to the above sulfuric acid to obtain a stable latex.

This latex was an agglomerated latex having an average particle size of 3,000 Å and a high concentration of a solids content of 41.2%, without byproducing any coagulum.

## Example 9

Example 8 was repeated except that after the latex A was formed, it was diluted into 40% concentration (29 parts by weight in terms of solids) and the quantity of the latex A to be added later was made 71 parts by weight in terms of solids, to obtain a stable latex.

This latex was a stable agglomerated latex having an average particle size of 3,600 Å and no coagulum was byproduced.

## Example 10

Example 8 was repeated except that after formation of the latex A, the latex diluted to a concentration of 40% had 24 parts by weight of solids and the latex A to be later added had 76 parts by weight of solids, to obtain a stable latex.

This latex had an average particle size of 3,700 Å and a solids content of 43.5% without byproducing any coagulum, that is, it was a latex having a large particle size and a high solids content.

## Comparative example 8

Butadiene monomer (100 parts), deionized water (85 parts), potassium oleate (1.7 part), sodium salt of an organosulfonate (0.1 part), tetrasodium pyrophosphate (2.0 parts), t-dodecylmercaptan (0.3 part) and potassium persulfate (0.2 part), each part by weight, were introduced into a pressure vessel equipped with a stirrer, and the temperature was raised up to 60°C to initiate polymerization.

When the rate of polymerization reached 65% after the initiation of polymerization, deionized water (5 parts by weight) and potassium persulfate (0.1 part by weight) were added into the pressure vessel and the polymerization temperature was raised up to 65°C. After a polymerization time of 22 hours, a polybutadiene latex having an average particle size of 1,900 Å. This latex will be referred to as latex B.

Next, to this latex B was added deionized water to prepare a latex having a concentration of 40%, and 2% sulfuric acid in 44 parts by weight based on 100 parts by weight of solids contained in the latex was added. The resulting pH was 3.2, and after 100 minutes, a 5% aqueous solution of NaOH was added to raise the pH up to 11.5 to obtain a stable latex. During the process of the agglomeration, no coagulum was byproduced, but the latex had an average particle size of 2,400 Å and a solids content as low as 31.7%.

Comparative example 9

Comparative example 8 was repeated except that, in order to increase the solids content of the latex to be obtained by enlarging the particle size and re-stabilizing the latex, the concentration of sulfuric acid in Comparative example 8 was raised up to 4% (22 parts by weight based on the weight of the solids) and such sulfuric acid was added. However, during the process of adding the above sulfuric acid, a large quantity of coagula was byproduced. The coagula were filtered through two sheets of gauze and the dry weight was measured to give 2.0 parts by weight.

**Claims**

1. A process for agglomerating polymer latex particles by adding an acid to a polymer latex of a small particle size obtained by emulsion polymerization using as a main emulsifying agent, an emulsifying agent which is reduced in the surface activity in an acidic state, in a conventional manner, which process comprises an operation of continuously feeding said polymer latex of a small particle size and an acid into a flow type tubular apparatus.

2. A process for agglomerating polymer latex particles by adding an acid to a polymer latex of a small particle size obtained by emulsion polymerization using as a main emulsifying agent, an emulsifying agent which is reduced in the surface activity in an acidic state, in a conventional manner, which process comprises an operation of adding to said polymer latex of a small particle size, an emulsifying agent having a good surface activity in an acidic state in advance, followed by continuously feeding the resulting polymer latex and an acid into a flow type tubular apparatus.

3. A process for agglomerating polymer latex particles by adding an acid to a polymer latex of a small particle size obtained by emulsion polymerization using as a main emulsifying agent, an emulsifying agent which is reduced in the surface activity in an acidic state, in a conventional manner, which process comprises an operation of adding to said polymer latex of a small particle size, a polymer-agglomerating agent having both a polar group and a non-polar group in one molecule in a quantity of 0.0001 to 0.5 part by weight based on 100 parts by weight of solids contained in said polymer latex in advance, followed by adding an acid so as to lower the pH of the resulting polymer latex down to 6 or less.

4. A process for agglomerating polymer latex particles by adding an acid to a polymer latex of a small particle size obtained by emulsion polymerization using as a main emulsifying agent, an emulsifying agent which is reduced in the surface activity in an acidic state, in a conventional manner, which process comprises an operation of adding to the polymer latex (A) of a small particle size, an emulsifying agent having a good surface activity in an acidic state in advance, then adding as a first step, adding an acid in excess to the resulting polymer latex to prepare a polymer latex having a lower concentration than that of the polymer latex (A) of a small particle size; thereafter as a second step, adding to and mixing with the resulting polymer latex, the polymer latex (A) of a small size; and keeping the resulting mixed polymer latex at a pH of 6 or less.

# F I G. 1